# EUROPÄISCHE PATENTSCHRIFT

(11) **EP 1 834 038 B1**
(45) Veröffentlichungstag und Bekanntmachung des Hinweises auf die Patenterteilung: **06.04.2016**
(21) Anmeldenummer: 05792664.4
(22) Anmeldetag: 15.10.2005
(51) Int. Cl.: D21H 11/12, D21H 13/14, D21H 17/54, A22C 13/00, D21H 17/25

(54) **FASERVLIES MIT VERBESSERTER NASS- UND ALKALIFESTIGKEIT UND DAMIT HERGESTELLTE NAHRUNGSMITTELHÜLLE AUF BASIS VON CELLULOSEHYDRAT**
NONWOVEN HAVING IMPROVED WET FASTNESS AND ALKALI RESISTANCE AND CELLULOSE HYDRATE-BASED FOOD CASING PRODUCED FROM SAID NONWOVEN
NON-TISSE AYANT UNE MEILLEURE RESISTANCE A L'HUMIDITE ET RESISTANCE AUX ALCALIS ET ENVELOPPES DE PRODUITS ALIMENTAIRES A BASE D'HYDRATE DE CELLULOSE REALISEES A PARTIR DE CE NON-TISSE

(30) Priorität: 20.10.2004 DE 102004051298
(43) Veröffentlichungstag der Anmeldung: 19.09.2007
(73) Patentinhaber: Kalle GmbH, 65203 Wiesbaden (DE)
(72) Erfinder: HAMMER, Klaus-Dieter, 55120 Mainz (DE); GORD, Herbert, 55218 Ingelheim (DE); LUTZ, Walter, 55257 Budenheim (DE)
(74) Vertreter: Plate, Jürgen
(86) Internationale Anmeldenummer: PCT/EP2005/011097
(87) Internationale Veröffentlichungsnummer: WO 2006/042713

(56) Entgegenhaltungen:
- EP-A1- 0 733 306
- WO-A-00/40092
- WO-A-01/49914
- WO-A-02/02871
- WO-A-2005/110102
- DE-A1- 2 933 108

## Beschreibung

Die Erfindung betrifft ein naßfestes Faservlies mit Fasern aus cellulosehaltigem Material und Fasern aus thermoplastischem Kunststoff, ein Verfahren zu dessen Herstellung und damit hergestellte Nahrungsmittelhüllen auf Basis von Cellulosehydrat.

Faserpapiere für spezielle Anwendungen, wie Teebeutelpapier oder Faserpapier zur Verstärkung von Nahrungsmittelhüllen auf Basis von regenerierter Cellulose, müssen zunächst naßfest gemacht werden. Das geschieht beispielsweise durch Behandeln mit verdünnter Viskoselösung, wie in der US-A 3 135 613 offenbart. Nahrungsmittelhüllen, insbesondere Wursthüllen, auf Basis von regenerierter Cellulose mit einer Faserpapiereinlage (allgemein als Cellulose-Faserdärme bezeichnet), werden in der Regel durch Beschichten mit Viskose hergestellt. Viskose ist jedoch stark alkalisch und löst das aus der verdünnten Viskoselösung stammende Cellulosehydrat, das die Fasern miteinander verbindet, zu einem erheblichen Teil wieder auf. Die Festigkeit des Faserpapiers geht daher beim Beschichten mit Viskose um bis zu 50 % oder sogar mehr zurück.

Dieser Nachteil läßt sich gemäß der GB 1 091 105 vermeiden, wenn bereits während der Papierherstellung ein synthetisches Harz mit den Fasern vermischt wird. Bevorzugt eingesetzte synthetische Harze sind Polyethylenimine und Polyamin-Polyamid-Epichlorhydrin-Harze.

Eine noch effektivere Bindung des Faserpapiers läßt sich erreichen, wenn als Bindemittel eine Mischung von Polyamin-Polyamid-Epichlorhydrin-Harz und Polyacrylamid eingesetzt wird (US 3 484 256). Mit Polyamin-Polyamid-Epichlorhydrin-Harzen gebundene Faserpapiere sind jedoch nicht thermostabil. Sind sie zu stark erwärmt worden - was insbesondere beim Trocknen leicht geschehen kann - versprödet und bricht die Harzbindung.

Im Vergleich zu einem mit verdünnter Viskose gebundenen Faserpapier stabiler bei Einwirkung der stark alkalischen Beschichtungsviskose ist ein Faserpapier, das mit NMMO-Cellulose gebunden ist (DE 196 37 621). Zum Binden der Fasern wird dabei in wasserhaltigem N-Methyl-morpholin-N-oxid (NMMO) gelöste Cellulose verwendet. Die Bindung ist noch stärker, wenn bei der Herstellung des Faserpapiers ein Polyamin-Polyamid-Epichlorhydrin-Harz zugemischt wird.

Bekannt ist schließlich auch ein Faserpapier, das neben cellulosischen Fasern, wie Hanffasern, auch synthetische Fasern enthält, insbesondere solche aus Polyamid, Polyester oder Polyolefin (WO 00/40092). Die Fasern in diesem Papier sind mit regenerierter Cellulose und/oder synthetischem Harz gebunden.

Weiterhin bekannt ist ein zweischichtiges Vliesmaterial mit einer ersten Vliesschicht aus thermoplastischen Polymerfasern oder -filamenten und einer zweiten Vliesschicht aus Zellstoff-Fasern oder einer Mischung von Zellstoff-Fasern und synthetischen Fasern (WO 01/49914). Die Polymerfasern oder -filamente der ersten Schicht werden durch Kalandrieren bei einer Temperatur unterhalb deren Erweichungstemperatur miteinander verbunden. Die Fasern oder Filamente der beiden Schichten werden insbesondere durch sogenanntes "Hydroentanglement" miteinander verbunden. Die beiden Vliesschichten haben jeweils ein Gewicht von etwa 5 bis 100 g/m². Verwendet wird das zweischichtige Vliesmaterial beispielsweise für Formpreßteile im Automobilbau oder als Wischtuch.

Gegenstand der WO 02/02871 ist ein Faservlies mit einem Gewicht von etwa 10 bis 50 g/m², aus dem sich insbesondere Teebeutel herstellen lassen. Es enthält Fasern aus Cellulose und Polymilchsäure. Die Polymilchsäure-Fasern sind thermoplastisch und heißsiegelfähig, so daß sich zwei Lagen aus dem Vlies unter Einwirkung von Druck und Hitze durch eine Siegelnaht miteinander verbinden lassen. Die Herstellung der Teebeutel gestaltet sich dadurch besonders einfach.

Das Faserpapier gemäß der GB-A 2 324 615 enthält Cellulosefasern, hauptsächlich Hanffasern, und gegebenenfalls Fasern aus synthetischen Polymeren. Die Fasern sind darin mit einer Mischung verschiedener Harze gebunden. Das Papier wird insbesondere zu thermosensitivem Schablonenpapier verarbeitet.

Für Nahrungsmittelhüllen, insbesondere Wursthüllen, werden entsprechend dem Kaliber der Hülle üblicherweise Faserpapiere mit einem Gewicht von 15 g/m², 17 g/m², 19 g/m², 21 g/m², 23,7 g/m² oder 25,4 g/m² eingesetzt.

Die bisher produzierten Cellulose-Faserdärme enthalten allgemein 33 bis 55 g/m² an Cellulosehydrat und daneben üblicherweise etwa 15 bis 30 g/m² an Glycerin, das als sekundärer Weichmacher dient. Der Wassergehalt der Hüllen beträgt in der Regel etwa 8 bis 10 Gew.-%. Ihr Gesamtgewicht beträgt allgemein, je nach Kaliber, etwa 75 bis 115 g/m². Sie sind damit relativ schwer und steif und nur schwer handhabbar, was sich insbesondere bei der Konfektionierung (speziell beim Aufstocken der Faserdärme zu Raffraupen) nachteilig auswirkt.

Es wurde bereits auf mehreren Wegen versucht, zu leichteren Faserdärmen zu gelangen. Dafür wurde ein besonders leichtes Faserpapier mit einem Gewicht von weniger als 15 g/m² verwendet, das dann mit der üblichen Viskosemenge beschichtet wurde (EP-A 0 460 146). Diese Maßnahme führte jedoch zu Produkten mit verschlechterten mechanischen Eigenschaften. Alternativ wurden Faserdärme mit Standard-Faserpapier und einer reduzierten Viskosemenge bei gleichzeitig erhöhter Spinngeschwindigkeit hergestellt (EP-A 0 733 306). Dabei zeigte sich, daß die Festigkeit dieser Faserdärme relativ zunahm, aber sie konnten sich am Markt bisher nicht durchsetzen.

Trotz aller Bemühungen steht bisher kein Faserpapier zur Verfügung, das sich für die Herstellung von Cellulose-Faserdärmen eignet, dabei gegen den hydrolytischen Angriff der Beschichtungsviskose stabil und gleichzeitig unempfindlich gegen thermische Beanspruchung ist. Die Beschichtungsviskose muß das neu zu schaffende Faserpapier zudem gut durchdringen können. Das Faserpapier muß sich schließlich fest mit der regenerierten Cellulose verbinden.

Überraschend hat sich gezeigt, daß ein gegen alkalische Hydrolyse und Hitzeeinwirkung praktisch unempfindliches Faserpapier bzw. Faservlies erhältlich ist, wenn bei dessen Herstellung Fasern aus thermoplastischem Kunststoff zugemischt werden, die unter der Einwirkung von Hitze und/oder Druck zumindest teilweise schmelzen und nach dem Abkühlen an den Kreuzungspunkten eine feste Verbindung der Fasern untereinander bewirken. An den Kreuzungspunkten den Kreuzungspunkten werden demgemäß die Kunststoff-Fasern mit den übrigen Fasern, d.h. insbesondere mit den Hanffasern, verbunden. Es hat den weiteren Vorteil, daß es bei der Weiterverarbeitung von der zum Beschichten eingesetzten Viskose oder NMMO-Cellulose-Lösung gut durchdrungen wird und sich fest mit der regenerierten bzw. gefällten Cellulose verbindet.

Gegenstand der vorliegenden Erfindung ist demgemäß ein naßfestes und gegen alkalische Hydrolyse praktisch unempfindliches Faservlies bzw. Faserpapier mit Fasern aus cellulosehaltigem Material und Fasern aus thermoplastischem Kunststoff, dadurch gekennzeichnet, daß nach zumindest teilweisen Aufschmelzen des thermoplastischen Kunststoffs die Fasern an den Kreuzungspunkten miteinander fest verbunden sind.

Der Anteil der Fasern aus thermoplastischem Kunststoff beträgt allgemein 2 bis 20 Gew.-%, bevorzugt 5 bis 15 Gew.-%, besonders bevorzugt 7,5 bis 12 Gew.-%, jeweils bezogen auf das Gewicht der Fasern aus cellulosehaltigem Material. Ein Anteil an Fasern aus thermoplastischem Kunststoff über der genannten Obergrenze würde die Haftung der regenerierten bzw. gefällten Cellulose an der Faserverstärkung beeinträchtigen. Die Fasern aus dem thermoplastischen Kunststoff sind praktisch homogen mit den anderen Fasern vermischt im Faservlies bzw. im Faserpapier enthalten.

Die Fasern aus cellulosehaltigem Material sind bevorzugt Hanffasern. Anstelle oder zusätzlich zu den Hanffasern können auch andere pflanzliche cellulosische Fasern oder davon abgeleitete, insbesondere chemisch modifizierte pflanzliche Fasern treten.

Die Fasern aus thermoplastischem Kunststoff sind bevorzugt solche aus Polyolefin (insbesondere Polypropylen) oder Blockcopolymere mit Polyolefin-Blöcken, Polyester (insbesondere Polyethylenterephthalat, Polybutylenterephthalat oder ein PET-Copolymer) oder Polyamid (insbesondere aliphatisches oder teilaromatisches Polyamid, wie PA6, PA 4.6, PA 6.6, PA 6.10, PA 6.12 oder PA 6.66. Bevorzugt sind unverstreckte oder gering verstreckte Fasern, die eine amorphe Struktur oder eine teilkristalline Struktur mit einem niedrigen Kristallinitätsgrad und dementsprechend eine relativ niedrige Erweichungstemperatur aufweisen.

Die Fasern aus thermoplastischem Kunststoff haben allgemein eine Dicke von etwa 0,5 bis 8 Denier (den), bevorzugt etwa 1 bis 5 den. Ihre Länge beträgt in der Regel etwa 0,3 bis 15 mm, bevorzugt etwa 4 bis 8 mm.

Die Fasern können auch aus mehreren Komponenten bestehen, wie das beispielsweise bei Bi- oder Multikomponenten-Fasern der Fall ist. Zu nennen sind hier Fasern mit einer Kern/Mantel-Struktur (S/C = Skin Core) oder einer Seite-an-Seite-Struktur (S/S). Mindestens eine der Komponenten - bei S/C-Typen wenigstens die außenliegende - sollte dann eine ausreichend niedrige Erweichungstemperatur haben, um ein Verschweißen der Fasern zuzulassen.

In einer besonderen Ausführungsform sind die Fasern zusätzlich mit einem synthetischen Harz, insbesondere einem Polyamin-Polyamid-Epichlorhydrin-Harz, gebunden. Der Anteil des synthetischen Harzes beträgt zweckmäßig 0,5 bis 3,0 Gew.-%, bevorzugt 1,0 bis 2,5 Gew.-%, jeweils bezogen auf das Trockengewicht des Faservlieses bzw. Faserpapiers.

Allgemein ist das Faservlies bzw. -papier zusätzlich mit regenerierter Cellulose gebunden. Das läßt sich beispielsweise durch Behandeln mit einer verdünnten Viskose, die zweckmäßig etwa 1 bis 2 Gew.-% an Cellulosexanthogenat enthält, erreichen.

Das erfindungsgemäße Faservlies bzw. -papier ist allgemein einschichtig. Es hat in trockenem Zustand ein Gewicht von etwa 13 bis 28 g/m². Es zeigt eine überraschende Festigkeit, die bei Einwirkung von wäßrigem Alkali sehr viel weniger abnimmt als bei den bekannten viskosegebundenen oder viskose/ harzgebundenen Faserpapieren, wie in den nachfolgenden Tabellen dargestellt.

Es läßt sich daher ein Faserpapier mit geringerem Flächengewicht verwenden als bisher erforderlich, ohne daß die damit hergestellten Produkte einen Festigkeitsverlust zeigen. Auch das Binden des Faserpapiers, das bisher ein sehr kritischer Verfahrensschritt war, ist bei dem erfindungsgemäßen Faserpapier wesentlich einfacher und bedarf keiner exakten Steuerung mehr.

Die Herstellung des erfindungsgemäßen Faserpapiers bzw- -vlieses erfolgt nach Verfahren, die einem in der Faserpapierherstellung tätigen Fachmann prinzipiell geläufig sind. Es umfaßt insbesondere die folgenden Schritte:
- Bereiten eines wäßrigen Breis (Pulpe), der Fasern aus cellulosischem Material und Fasern aus oder mit thermoplastischen Polymeren umfaßt;
- gegebenenfalls Vermischen des Faserbreis mit wasserlöslichen Bindemitteln, bevorzugt mit kationischen Polyamin-Polyamid-Epichlorhydrin-Harzen;
- Ablegen der Fasern auf einem Sieb zur Bildung eines Faserpapiers;
- Trocknen des Faserpapiers;
- zumindest teilweises Aufschmelzen der thermoplastischen Fasern und dadurch Verbinden dieser Fasern mit den Fasern aus cellulosischem Material, was beispielsweise durch Kalandrieren mit beheizten Kalanderwalzen, unter der Einwirkung von Mikrowellen und/oder von InfrarotStrahlung erfolgen kann, und
- Behandeln des trockenen Faserpapiers mit verdünnter Viskose, Regenerieren der Viskose zu Cellulosehydrat (allgemein mit einem sauren Fällbad) und erneutes Trocknen.

Die Pulpe enthält relativ wenig Fasern, bevorzugt nicht mehr als 0,5 Gew.-%, besonders bevorzugt etwa 0,10 bis 0,25 Gew.-%. Die Fasern werden dann aus dem Faserbrei vorzugsweise auf einem Schrägsieb zu einem grobstrukturierten Faserpapier abgelegt. Das Trocknen des Faserpapiers erfolgt besonders zweckmäßig auf beheizten Walzen mit großem Durchmesser (etwa 1 bis 2 m Durchmesser). Die zum Verschmelzen der thermoplastischen Fasern erforderliche Temperatur richtet sich nach der Art der Fasern. Typischerweise haben die Kalanderwalzen eine Temperatur im Bereich von etwa 100 bis 140 °C. Das Behandeln mit verdünnter Viskose zur Herstellung der Viskosebindung erfolgt vorzugsweise nach dem Kalandrieren, erfolgt sie davor, wird sie teilweise wieder zerstört. Der Anteil der aus der verdünnten Viskose erhaltenen regenerierten Cellulose beträgt zweckmäßig 1,0 bis 3,0 Gew.-%, bezogen auf das Gesamtgewicht des (trockenen) Faservlieses. Die Viskosebindung bewirkt, daß das Vlies besser von der bei der Herstellung von Cellulose-Faserdärmen verwendeten Beschichtungsviskose durchdrungen werden kann. Das Cellulosehydrat aus der Beschichtungsviskose haftet dann zudem wesentlich besser.

Das erfindungsgemäße Faservlies kann als Teebeutelpapier eingesetzt werden. Besonders geeignet ist es jedoch als Verstärkung in Nahrungsmittelhüllen auf Basis von Cellulosehydrat. Gegenstand der vorliegenden Erfindung ist demgemäß auch eine Nahrungsmittelhülle auf Basis von regenerierter oder gefällter Cellulose, die eine Verstärkung aus dem erfindungsgemäßen Faservlies bzw. Faserpapier umfaßt.

Mit dem beschriebenen thermo- und hydrolysestabil gebundenen Faserpapier werden Cellulose-Faserdärme mit völlig neuen Eigenschaften zugänglich. So läßt sich die Menge der Viskose, die auf das zum Schlauch geformte Faserpapier aufgebracht wird, um etwa 20 bis 50 Gew.-% vermindern. Der Gewichtsanteil des Faservlieses bzw. -papiers am Gesamtgewicht der Hülle in trockenem Zustand beträgt demgemäß in der bevorzugten Ausführungsform etwa 25 bis 40 %, bevorzugt etwa 28 bis 35 %. Die Festigkeit des Cellulose-Faserdarms ist dann überraschenderweise genauso hoch wie die eines Faserdarms, der mit konventionellem Faserpapier und der vollen Menge an Viskose hergestellt wurde. Bei gleicher Festigkeit ist die erfindungsgemäße Nahrungsmitelhülle darüber hinaus geschmeidiger und transparenter. Da sie relativ dünn ist, lassen sich mehr Meter davon zu einer Raffraupe vorgegebener Länge komprimieren (beispielsweise kann aus 50 Metern einer erfindungsgemäßen Hülle vom Kaliber 58 eine 42 cm lange Raffraupe hergestellt werden). Darüber hinaus läßt sich die Spinngeschwindigkeit um 60 bis 180 % erhöhen, was die Herstellung weiter rationalisiert. Die erfindungsgemäßen Nahrungsmittelhüllen bringen daher eine erhebliche Material- und Energiekostenersparnis mit sich, was auch die Umweltbelastung vermindert.

Die erfindungsgemäßen schlauchförmigen Nahrungsmittelhüllen können innen und/oder außen zusätzlich beschichtet oder imprägniert sein. Geeignete Beschichtungen oder Imprägnierungen sind dem Fachmann allgemein bekannt. Zu nennen sind insbesondere PVDC-Innenbeschichtungen, die Durchlässigkeit der Hülle für Wasserdampf und Luftsauerstoff stark herabsetzen. Für die PVDC-Innenbeschichtung werden insbesondere Vinylidenchlorid-Copolymere eingesetzt, die etwa 60 bis 85 Gew.-% an VDC-Einheiten aufweisen. Des weiteren sind Imprägnierungen zu nennen, mit denen sich die Haftung der Hülle an dem darin befindlichen Nahrungsmittel einstellen läßt. Es wird besonders auf die sogenannten Easy-Peel-Imprägnierungen hingewiesen, die die Hülle leicht schälbar machen. Schließlich kann die erfindungsgemäße Nahrungsmittelhülle auch mit Flüssigrauch oder anderen Aroma-, Geschmacks- und/oder Farbstoffen getränkt sein.

Die Herstellung der erfindungsgemäßen Nahrungsmittelhülle erfolgt nach Verfahren, die dem Fachmann prinzipiell bekannt sind. Dabei wird das thermo- und hydrolysestabil gebundene Faserpapier allgemein in Bahnen passender Breite geschnitten, die zu Schläuchen mit überlappenden Längskanten geformt werden. Die Schläuche werden dann von außen, von innen oder von beiden Seiten mit Viskose beaufschlagt (Außenviskosierung, Innenviskosierung bzw. Doppelviskosierung). In Fäll- und Waschbädern wird die Cellulose aus der Viskose regeneriert. Alternativ können die Schläuche aus dem erfindungsgemäßen Faserpapier auch mit NMMO-Cellulose-Lösungen von außen, von innen oder von beiden Seiten beschichtet werden. Diese Verfahrensweise hat den Vorteil, daß keine sauren Fällbäder benötigt werden. Um die Eigenschaften der Nahrungsmittelhüllen entsprechend den Vorgaben der Anwender zu modifizierten, können der Viskose bzw. der NMMO-Cellulose-Lösung polymere Additive zugesetzt sein, wie Alginsäure oder Alginate oder Polyvinylpyrrolidon. Bevorzugt sind Additive, die die Nahrungsmittelhülle permanent weichmachen, d.h. als primäre Weichmacher wirken.

Die erfindungsgemäßen Cellulose-Faserdärme können in allgemein bekannter Weise konfektioniert sein, insbesondere können sie abschnittsweise zu Raffraupen komprimiert sein.

Die nachfolgenden Beispiele dienen zur Illustration der Erfindung. Prozente sind darin Gewichtsprozente, soweit nicht anders angegeben oder aus dem Zusammenhang unmittelbar ersichtlich.

### Beispiel 1

Es wurde ein wäßriger Faserbrei (paper pulp) mit 0,1 bis 0,2 % Faseranteil hergestellt, der Hanffasern mit einer durchschnittlichen Länge von 2 mm und 5 %, bezogen auf das Gewicht der Hanffasern, amorphe Polypropylenfasern mit einer durchschnittlichen Länge von 5 mm enthielt. Dem Faserbrei wurde ein wasserlösliches Polyamin-Polyamid-Epichlorhydrin-Harz zugesetzt in einer Menge, die einen Anteil von 2 % in dem trockenen Faserpapier ergibt. Die Fasern aus dem Faserbrei wurden auf ein Schrägsieb zu einem Faserpapier abgelegt. Das nasse Papier wurde dann über eine beheizte Walze geführt und getrocknet. Vor dem Aufwickeln wurde das Faserpapier durch ein auf 120 °C erhitztes Kalanderwalzenpaar geführt, um die Propylenfasern zu schmelzen und an den Kreuzungspunkten miteinander zu verbinden. Das getrocknete Papier wurde durch ein Bad mit einer 1 %igen Viskose geführt und anschließend durch ein saures Fällbad sowie mehrere Waschbäder, in denen die Viskose zu Cellulose regeneriert wurde. Danach wurde erneut getrocknet. Das so hergestellte Faserpapier hatte ein Gewicht von 17 g/m². Es enthielt 1,5 % an regenerierter Cellulose. Seine Reißfestigkeit betrug 5,7 N in Längsrichtung und 7,1 N in Querrichtung. Die Reißdehnung betrug 8,9 % in Längsrichtung und 4,9 % in Querrichtung.

Nach 10 min Behandeln mit 6 %iger NaOH hatte das Papier nur 15 % an Naßfestigkeit verloren, während ein konventionelles Papier (ohne Zusatz von thermoplastischen Fasern) etwa 24 bis 26 % verliert.

Das Papier wurde in der allgemein bekannten Weise auf passende Breite geschnitten, zu einem Schlauch vom Kaliber 60 mit überlappenden Längsnähten geformt und von außen mit Viskose beschichtet. Die Viskose konnte das Faserpapier einwandfrei durchdringen. Die regenerierte Cellulose zeigte eine gute Haftung am Faserpapier und ließ sich auch bei mechanischer Beanspruchung nicht mehr ohne vollständige Zerstörung von dem Faserpapier trennen. Der fertige Faserdarm hatte ein Gewicht von 84 g/m² und zeigte einen Platzdruck (naß) von 79 kPa, d.h. einen um 13 % über dem für ein 17 g/m²-Papier üblichen Wert. Die statische Dehnung bei 21 kPa Innendruck blieb unverändert bei 64,8 mm (Spezifikation: 63,3 bis 66,3 mm).

### Beispiel 2

Beispiel 1 wurde wiederholt mit der Abweichung, daß das naßfeste 17 g/m²-Papier zu einem Schlauch vom Kaliber 58 mit überlappenden Rändern geformt wurde. Der Schlauch wurde dann von außen mit einer um 30 % gegenüber Beispiel 1 verminderten Menge an Viskose beschichtet. Die Spinngeschwindigkeit war doppelt so hoch wie im Beispiel 1. Trotz der Erhöhung der Spinngeschwindigkeit um 100 % konnte die Zusammensetzung des Spinnbads unverändert bleiben. Die Viskose durchdrang das Faserpapier einwandfrei. Die regenerierte Cellulose zeigte eine gute Haftung an dem Faserpapier und ließ sich auch bei mechanischer Beanspruchung nicht mehr ohne vollständige Zerstörung von dem Faserpapier trennen. Der fertige Faserdarm hatte ein Gewicht von 65 g/m² bei einem Wassergehalt von 10 %. Der Platzdruck (naß) lag bei 81 kPa. Der Platzdruck war damit genauso groß wie bei einem Faserdarm vom Kaliber 58, der mit konventionellem 21 g/m²-Papier und der vollen Menge an Beschichtungsviskose hergestellt war. Die statische Dehnung bei 21 kPa Innendruck blieb unverändert bei 64,8 mm (Spezifikation: 63,3 bis 66,3 mm).

### Beispiel 3

Wie im Beispiel 1 beschrieben wurde ein 0,2 % Fasern enthaltender wäßriger Brei gebildet, der 15 %, bezogen auf das Gewicht der Hanffasern, an Polypropylenfasern mit einer durchschnittlichen Länge von 3 mm enthielt. Wie beschrieben, wurde aus dem Faserbrei ein grobstrukturiertes Faserpapier hergestellt. Das getrocknete Papier wurde in gleicher Weise mit einer 1 %igen Viskose behandelt und die Viskose zu Cellulose regeneriert. Anschließend wurde erneut getrocknet. Das trockene Faserpapier hatte ein Gewicht von 19 g/m². Es hatte eine Reißfestigkeit (naß) von 7,6 N in Längsrichtung und 9,6 N in Querrichtung. Die Reißdehnung betrug 9,1 % in Längsrichtung und 5,2 % in Querrichtung und entsprach damit in etwa der eines Standardpapiers ohne Zusatz von Kunststoff-Fasern. Der Anteil an regenerierter Cellulose in dem Papier betrug etwa 1,8 %. Nach 10 min Behandeln mit 6 %iger NaOH hatte das Papier nur etwa 8 % seiner Naßfestigkeit verloren.

Das Papier wurde zu einem Schlauch vom Kaliber 75 geformt, der von außen mit Viskose beschichtet wurde, wobei gegenüber Beispiel 1 die pro Flächeneinheit aufgetragene Viskosemenge um 40 % vermindert und die Spinngeschwindigkeit um 120 % erhöht war. Die Viskose konnte das Papier einwandfrei durchdringen, ebenso gut wie bei einem Standardpapier. Die regenerierte Cellulose zeigte eine gute Haftung an dem Faserpapier. Der fertige Faserdarm hatte ein Gewicht von 50 g/m² und wies einen Platzdruck (naß) von 76 kPa auf. Er lag damit 22 % über dem Platzdruck, der für einen mit 19 g/m²-Faserpapier üblich ist. Die statische Dehnung bei 21 kPa Innendruck lag bei 81,6 mm und damit innerhalb des geforderten Bereichs (Spezifikation: 80,3 bis 83,3 mm).

### Beispiel 4

Beispiel 3 wurde wiederholt mit der Abweichung, daß das zu einem Schlauch vom Kaliber 75 geformte 19 g/m²-Faserpapier von außen mit einer um 45 % gegenüber Beispiel 3 verminderten Viskosemenge beschichtet wurde. Die Spinngeschwindigkeit war um 120 % gegenüber Beispiel 3 erhöht. Die Viskose konnte das Faserpapier problemlos durchdringen und die regenerierte Cellulose zeigte eine gute Haftung an dem Faserpapier. Der fertige Faserdarm hatte ein Gewicht von 47 g/m², bei einem Wassergehalt von 10 %. Er wies einen Platzdruck (naß) von 76 kPa auf. Er lag damit um 22 % über dem Platzdruck, der für einen mit 19 g/m²-Faserpapier und der vollen Viskosemenge hergestellten Faserdarm gemessen wird. Die statische Dehnung bei 21 kPa Innendruck lag bei 81,6 mm und damit innerhalb des geforderten Bereichs (Spezifikation: 80,3 bis 83,3 mm).

### Beispiel 5

Es wurde eine Nahrungsmittelhülle gemäß Beispiel 4 hergestellt, deren Faserpapier nach der beschriebenen Behandlung mit Alkali die Festigkeit eines 23 g/m² Papiers erreichte. Dieses Papier wurde zu einem Schlauch vom Kaliber 58 geformt und dann von außen mit einer gegenüber Beispiel 1 pro Flächeneinheit um 30 % verminderten Menge an Viskose beschichtet. Die Spinngeschwindigkeit ließ sich bei unveränderter Zusammensetzung des Spinnbades um 100 % erhöhen.

Der so hergestellte Faserdarm zeigte einen Platzdruck von 90 kPa. Das war praktisch identisch mit einem Faserdarm mit einem konventionellen 19 g/m² Papier, der mit der vollen Viskosemenge hergestellt wurde. Aufgrund der geringeren Wandstärke des erfindungsgemäßen Faserdarms umfaßte eine Raffraupe der Standardlänge von 420 mm 40 m der Hülle anstelle von 33 m bei der konventionellen Hülle.

Der Faserdarm ließ sich ohne Ausfälle mit Salami-Brät füllen und abclippen. Der Reifeverlauf war normal.

### Beispiel 6

Es wurde eine Nahrungsmittelhülle gemäß Beispiel 2 hergestellt mit dem Unterschied, daß aus dem Faserpapier ein Schlauch vom Kaliber 90 mit überlappenden Rändern geformt wurde. Der Schlauch wurde von außen mit einer um 25 % reduzierten Viskosemenge beaufschlagt, wodurch die Spinngeschwindigkeit um 80 % erhöht werden konnte, ohne daß dazu die Zusammensetzung des Spinnbades geändert werden mußte.

Der fertige Faserdarm hatte ein Gewicht von 63 g/m², bei einem Wassergehalt von 10 %. Der Platzdruck (naß) betrug 52 kPa, was dem eines Faserdarms entsprach, der mit einem konventionellen 19 g/m²-Papier und der vollen (100 %) Viskosemenge hergestellt war.

Von der erfindungsgemäßen Hülle ließen sich 50 m zu einer Raffraupe mit einer Standardlänge von 42 cm komprimieren, während es bei einer konventionellen Hülle nur 33 m waren.

Die Hülle ließ sich ebenso gut füllen und durch Abclippen verschließen wie eine konventionelle Hülle. Das Reifeverhalten nach dem Füllen mit Dauerwurst-Brät war normal.

### Beispiel 7

Hier wurde ein 15 g/m² -Hanffaserpapier eingesetzt, das 10 %, bezogen auf das Gewicht der Hanffasern, an verschweißten Polypropylenfasern enthielt. Die Festigkeit dieses Papiers entsprach nach der Behandlung mit Alkali der eines konventionellen 19 g/m²-Papiers. Das Papier mit den Polypropylenfasern wurde zu einem Schlauch vom Kaliber 40 mit überlappenden Rändern geformt und der so entstandene Schlauch von außen mit Viskose beaufschlagt, wobei die Spinngeschwindigkeit um 50 % erhöht wurde, ohne die Zusammensetzung des Spinnbads zu ändern. Die pro Flächeneinheit aufgetragene Viskosemenge war um 25 % vermindert im Vergleich zu Beispiel 1. Nach Durchlaufen der üblichen Spinn- und Waschbäder und des Trockners hatte der Cellulose-Faserdarm ein Gewicht von 60 g/m². Der Platzdruck (naß) der Hülle lag bei 106 kPa. Dieser Wert entspricht damit praktisch genau dem eines Cellulose-Faserdarms mit einem konventionellen 17 g/m²-Papier.

Die Raffraupen mit einer Standardlänge von 42 cm umfaßten 40 m dieser Hülle.

Die Hülle konnte problemlos und ohne Ausfälle durch Platzer mit Dauerwurst-Brät gefüllt werden. Das Reifeverhalten wurde mit "normal" beurteilt.

### Beispiel 8 (Vergleichsbeispiel):

Ein Hanffaserpapier mit einem Gewicht von 17 g/m², das keine Kunststoff-Fasern enthielt, wurde zu einem Schlauch vom Kaliber 58 mit überlappenden Längskanten geformt. Der Schlauch wurde dann mit einer Ringdüse von außen mit Viskose beschichtet. Nach dem Durchlaufen der diversen Spinn- und Waschbäder wurde daraus ein konventioneller Cellulose-Faserdarm mit einem Gewicht von 84 g/m² erhalten, bei einem Wassergehalt von 10 %. Der Platzdruck (naß) des Faserdarms betrug 80 kPa.

Das für diesen Faserdarm verwendete 17 g/m²-Faserpapier wies die in der folgenden Tabelle 1 aufgeführten Festigkeitswerte auf.

**Tabelle 1**

| Faserpapier | | ohne Kunststoff-Fasern **(Vergleich)** | | | mit 5 % Polypropylenfasern | | |
|---|---|---|---|---|---|---|---|
| Papiergewicht | Richtung | Festigkeit | | | Festigkeit | | |
| | | naß | nach Alkalibehandlung | Verlust | naß | nach Alkalibehandlung | Verlust |
| [g/m²] | | [N] | [N] | [%] | [N] | [N] | [%] |
| 15 | längs | 4,2 | 3,2 | 24 | 5,0 | 4,25 | 15 |
| | quer | 5,2 | 4,0 | 23 | 6,2 | 5,2 | 16 |
| 17 | längs | 4,8 | 3,6 | 24 | 5,7 | 4,8 | 16 |
| | quer | 5,9 | 4,6 | 21 | 7,1 | 6,0 | 15 |
| 19 | längs | 5,4 | 4,3 | 21 | 6,5 | 5,6 | 14 |
| | quer | 7,1 | 5,6 | 20 | 8,5 | 7,4 | 16 |
| 21 | längs | 6,6 | 5,2 | 21 | 7,9 | 6,7 | 15 |
| | quer | 7,6 | 6,0 | 21 | 9,1 | 7,9 | 16 |
| 23 | längs | 7,2 | 5,5 | 23 | 8,6 | 7,4 | 17 |
| | quer | 8,8 | 7,1 | 19 | 10,6 | 9,0 | 15 |
| 25 | längs | 8,5 | 7,0 | 17 | 10,2 | 8,8 | 14 |
| | quer | 10,4 | 8,7 | 16 | 10,4 | 9,0 | 13 |

**Tabelle 2**

| Faserpapier | | mit 10 % Polypropylenfasern | | | mit 15 % Polypropylenfasern | | |
|---|---|---|---|---|---|---|---|
| Papiergewicht | Richtung | Festigkeit | | | Festigkeit | | |
| | | naß | nach Alkali-behandlung | Verlust | naß | nach Alkalibehandlung | Verlust |
| [g/m²] | | [N] | [N] | [%] | [N] | [N] | [%] |
| 15 | längs | 4,7 | 4,1 | 12 | 5,9 | 5,35 | 9,0 |
| | quer | 5,8 | 5,0 | 13 | 8,7 | 8,0 | 8,0 |
| 17 | längs | 6,2 | 5,5 | 11,3 | 6,7 | 6,2 | 7,5 |
| | quer | 7,7 | 6,8 | 11,7 | 8,3 | 7,6 | 8,5 |
| 19 | längs | 7,0 | 6,2 | 11,4 | 7,6 | 7,0 | 8,0 |
| | quer | 9,2 | 8,1 | 12 | 9,6 | 8,8 | 9,5 |
| 21 | längs | 8,6 | 7,6 | 11,4 | 7,3 | 6,7 | 8,0 |
| | quer | 9,9 | 8,7 | 12,2 | 8,4 | 7,6 | 9,0 |
| 23 | längs | 9,35 | 8,2 | 12,3 | 7,7 | 7,1 | 8,0 |
| | quer | 11,4 | 10,0 | 12,3 | 9,9 | 9,1 | 8,0 |
| 25 | längs | 11,0 | 8,7 | 11,8 | 9,8 | 9,2 | 6,0 |
| | quer | 13,5 | 11,9 | 11,9 | 12,2 | 11,3 | 7,0 |

**Tabelle 3**

| Beispiele | 1 | 2 | 3 | 4 | 5 | 6 | 7 | 8* |
|---|---|---|---|---|---|---|---|---|
| Papiergewicht | 17 g/m² | 17 g/m² | 19 g/m² | 19 g/m² | 17 g/m² | 17 g/m² | 15 g/m² | 17 g/m² |
| PP-Fasern | 5% | 5% | 15% | 15% | 5% | 15% | 10% | 0 |
| Kaliber | 60 | 58 | 75 | 75 | 58 | 90 | 40 | 58 |
| beschichtet | 84 g/m² | 65 g/m² | 50 g/m² | 47 g/m² | 65 g/m² | 70 g/m² | 76 g/m² | 84 g/m² |
| Viskose | Standard | - 30 % | - 40 % | - 30 % | - 30 % | - 25 % | - 20 % | Standard |
| Spinngeschwindigkeit | Standard | +100 % | +120% | +120% | + 100 % | + 80 % | + 50 % | Standard |
| Platzdruck (naß) | 79 kPa | 81 kPa | 76 kPa | 76 kPa | 90 kPa | 52 kPa | 106 kPa | 80 kPa |
| stat. Dehnung | 64,8 mm | 64,8 mm | 81,6 mm | 81,6 mm | 64,8 mm | 97,9 mm | 46,3 mm | 64,8 mm |

| | | | | | | | | |
|---|---|---|---|---|---|---|---|---|
| *Vergleichsbeispiel | | | | | | | | |

## Patentansprüche

1. Naßfestes, einschichtiges Faservlies mit Fasern aus cellulosehaltigem Material und thermoplastischem Kunststoff, **dadurch gekennzeichnet, dass** die Fasern aus thermoplastischem Kunststoff eine durchschnittliche Länge von 0,3 bis 15 mm aufweisen, dass sie nach zumindest teilweisem Aufschmelzen des thermoplastischen Kunststoffs an den Kreuzungspunkten fest miteinander verbunden sind und dass das Faservlies zusätzlich mit regenerierter Cellulose gebunden ist.

2. Faservlies gemäß Anspruch 1, **dadurch gekennzeichnet, daß** der Anteil der Fasern aus thermoplastischem Kunststoff 2 bis 20 Gew.-%, bevorzugt 5 bis 15 Gew.-%, besonders bevorzugt 7,5 bis 12 Gew.-%, beträgt, jeweils bezogen auf das Gewicht der Fasern aus cellulosehaltigem Material.

3. Faservlies gemäß Anspruch 1 oder 2, **dadurch gekennzeichnet, daß** die Fasern aus thermoplastischem Kunststoff eine Dicke von 0,5 bis 8,0 den, bevorzugt 1,0 bis 5,0 den, aufweisen.

4. Faservlies gemäß einem oder mehreren der Ansprüche 1 bis 3, **dadurch gekennzeichnet, daß** die Fasern aus thermoplastischem Kunststoff eine durchschnittliche Länge von 4 bis 8 mm aufweisen.

5. Faservlies gemäß einem oder mehreren der Ansprüche 1 bis 4, **dadurch gekennzeichnet, daß** der thermoplastische Kunststoff amorph oder teilkristallin ist.

6. Faservlies gemäß einem oder mehreren der Ansprüche 1 bis 5, **dadurch gekennzeichnet, daß** die Fasern aus cellulosehaltigem Material Hanffasern sind.

7. Faservlies gemäß einem oder mehreren der Ansprüche 1 bis 6, **dadurch gekennzeichnet, daß** es mit verdünnter Viskose gebunden ist, wobei der Anteil an regenerierter Cellulose aus der verdünnten Viskose vorzugsweise 1,0 bis 3,0 Gew.-% beträgt, bezogen auf sein Gesamtgewicht.

8. Faservlies gemäß einem oder mehreren der Ansprüche 1 bis 7, **dadurch gekennzeichnet, daß** es ein Faserpapier ist.

9. Verfahren zur Herstellung eines Faservlieses gemäß einem oder mehreren der Ansprüche 1 bis 8, umfassend die folgenden Schritte:
a) Bereiten eines wäßrigen Breis, der Fasern aus cellulosischem Material und Fasern aus oder mit thermoplastischen Polymeren umfaßt;
b) gegebenenfalls Vermischen des Faserbreis mit wasserlöslichen Bindemitteln, bevorzugt mit kationischen Polyamin-Polyamid-Epichlorhydrin-Harzen;
c) Ablegen der Fasern auf einem Sieb zur Bildung eines Faserpapiers;
d) Trocknen des Faserpapiers;
e) zumindest teilweises Aufschmelzen der thermoplastischen Fasern und
f) Behandeln des trockenen Faserpapiers mit verdünnter Viskose, Regenerieren der Viskose zu Cellulosehydrat und erneutes Trocknen.

10. Verfahren gemäß Anspruch 9, **dadurch gekennzeichnet, daß** der Faserbrei nicht mehr als 0,5 Gew.-%, bevorzugt etwa 0,1 bis 0,25 Gew.-%, an Fasern enthält.

11. Verfahren gemäß Anspruch 9 oder 10, **dadurch gekennzeichnet, daß** das Trocknen des Faserpapiers auf beheizten Walzen mit großem Durchmesser erfolgt.

12. Verfahren gemäß Anspruch 9 oder 10, **dadurch gekennzeichnet, daß** das zumindest teilweise Aufschmelzen der thermoplastischen Fasern durch Kalandrieren mit beheizten Kalanderwalzen, unter der Einwirkung von Mikrowellen und/oder von Infrarot-Strahlen erfolgt.

13. Nahrungsmittelhülle auf Basis von regenerierter oder gefällter Cellulose, **dadurch gekennzeichnet, daß** sie eine Verstärkung aus einem Faservlies gemäß einem oder mehreren der Ansprüche 1 bis 8 umfaßt.

14. Nahrungsmittelhülle gemäß Anspruch 13, **dadurch gekennzeichnet, daß** der Anteil des Faservlieses am Gesamtgewicht der Hülle in trockenem Zustand 25 bis 40 %, bevorzugt 28 bis 35 %, ausmacht.

15. Nahrungsmittelhülle gemäß Anspruch 13 oder 14, **dadurch gekennzeichnet, daß** sie auf der Innen- und/oder Außenseite beschichtet oder imprägniert ist.

16. Nahrungsmittelhülle gemäß einem oder mehreren der Ansprüche 13 bis 15, **dadurch gekennzeichnet, daß** sie in komprimierter Form als Raffraupe vorliegt.

## Claims

1. A wetfast, single-layer nonwoven having fibers made of cellulosic material and thermoplastic, wherein the fibers made of thermoplastic have a mean length of 0.3 to 15 mm, in that after at least partial melting of the thermoplastic they are firmly bonded to one another at the intersection points and in that the nonwoven is additionally bonded with regenerated cellulose.

2. The nonwoven as claimed in claim 1, wherein the fraction of the fibers made of thermoplastic is 2 to 20 % by weight, preferably 5 to 15 % by weight, particularly preferably 7.5 to 12 % by weight, in each case based on the weight of the fibers made of cellulosic material.

3. The nonwoven as claimed in claim 1 or 2, wherein the fibers made of thermoplastic have a thickness of 0.5 to 8.0 den, preferably 1.0 to 5.0 den.

4. The nonwoven as claimed in one or more of claims 1 to 3, wherein the fibers made of thermoplastic have a mean length of 4 to 8 mm.

5. The nonwoven as claimed in one or more of claims 1 to 4, wherein the thermoplastic is amorphous or partially crystalline.

6. The nonwoven as claimed in one or more of claims 1 to 5, wherein the fibers made of cellulosic material are hemp fibers.

7. The nonwoven as claimed in one or more of claims 1 to 6, wherein it is bonded by dilute viscose, the fraction of regenerated cellulose from the dilute viscose preferably being 1.0 to 3.0 % by weight, based on its total weight.

8. The nonwoven as claimed in one or more of claims 1 to 7, wherein it is a fibrous paper.

9. A process for producing a nonwoven as claimed in one or more of claims 1 to 8, comprising the following steps:
a) providing an aqueous pulp which comprises fibers made of cellulosic material and fibers made of or comprising thermoplastic polymers;
b) optionally mixing the fiber pulp with watersoluble binders, preferably with cationic polyamine-polyamide-epichlorohydrin resins;
c) laying the fibers on a screen for formation of a fibrous paper;
d) drying the fibrous paper;
e) at least partial melting of the thermoplastic fibers and
f) treating the dry fibrous paper with dilute viscose, regeneration of the viscose to give cellulose hydrate and renewed drying.

10. The process as claimed in claim 9, wherein the fiber pulp contains no more than 0.5 % by weight, preferably about 0.1 to 0.25 % by weight, of fibers.

11. The process as claimed in claim 9 or 10, wherein the fibrous paper is dried on heated rollers having a large diameter.

12. The process as claimed in claim 9 or 10, wherein the at least partial melting of the thermoplastic fibers proceeds via calendering using heated calender rollers, under the action of microwaves and/or infrared radiation.

13. A food casing based on regenerated or precipitated cellulose, wherein it comprises a reinforcement made of a nonwoven as claimed in one or more of claims 1 to 8.

14. The food casing as claimed in claim 13, wherein the fraction of the nonwoven makes up 25 to 40 %, preferably 28 to 35 %, of the total weight of the casing in the dry state.

15. The food casing as claimed in claim 13 or 14, wherein it is coated or impregnated on the inside and/or outside.

16. The food casing as claimed in one or more of claims 13 to 15, wherein it is present in compacted form as shirred stick.

## Revendications

1. Non-tissé monocouche résistant à l'humidité, avec des fibres en une matière contenant de la cellulose et en une matière synthétique thermoplastique, **caractérisé en ce que** les fibres en matière synthétique thermoplastique ont une longueur moyenne de 0,3 à 15 mm, **en ce qu'**elles sont reliées entre elles de manière durable aux points de croisement après une fusion au moins partielle de la matière synthétique thermoplastique et **en ce que** le non-tissé est lié en plus avec de la cellulose régénérée.

2. Non-tissé selon la revendication 1, **caractérisé en ce que** la proportion de fibres en matière synthétique thermoplastique vaut 2 à 20 % en poids, de préférence 5 à 15 % en poids, encore de préférence 7,5 à 12 % en poids, à chaque fois par rapport au poids des fibres en une matière contenant de la cellulose.

3. Non-tissé selon la revendication 1 ou 2, **caractérisé en ce que** les fibres en matière synthétique thermoplastique ont une épaisseur de 0,5 à 8,0 den, de préférence de 1,0 à 5,0 den.

4. Non-tissé selon une ou plusieurs des revendications 1 à 3, **caractérisé en ce que** les fibres en matière synthétique thermoplastique ont une longueur moyenne de 4 à 8 mm.

5. Non-tissé selon une ou plusieurs des revendications 1 à 4, **caractérisé en ce que** la matière synthétique thermoplastique est amorphe ou semi-cristalline.

6. Non-tissé selon une ou plusieurs des revendications 1 à 5, **caractérisé en ce que** les fibres en une matière contenant de la cellulose sont des fibres de chanvre.

7. Non-tissé selon une ou plusieurs des revendications 1 à 6, **caractérisé en ce qu'**il est lié avec de la viscose diluée, la proportion de cellulose régénérée à partir de la viscose diluée vaut de préférence 1,0 à 3,0 % en poids, par rapport à son poids total.

8. Non-tissé selon une ou plusieurs des revendications 1 à 7, **caractérisé en ce qu'**il s'agit d'un papier de fibres.

9. Procédé de fabrication d'un non-tissé selon une ou plusieurs des revendications 1 à 8, comprenant les étapes suivantes :
a) préparation d'une pâte aqueuse qui comprend des fibres en une matière cellulosique et des fibres en des polymères thermoplastiques ou avec des polymères thermoplastiques ;
b) le cas échéant, mélange de la pâte de fibres avec des liants solubles dans l'eau, de préférence des résines polyamine-polyamide-épichlorhydrine cationiques ;
c) dépôt des fibres sur un tamis pour former un papier de fibres ;
d) séchage du papier de fibres ;
e) fusion au moins partielle des fibres thermoplastiques ; et
f) traitement du papier de fibres sec avec une viscose diluée, régénération de la viscose en hydrate de cellulose et nouveau séchage.

10. Procédé selon la revendication 9, **caractérisé en ce que** la pâte de fibres ne contient pas plus de 0,5 % en poids, de préférence de 0,1 à 0,25 % en poids environ, de fibres.

11. Procédé selon la revendication 9 ou 10, **caractérisé en ce que** le séchage du papier de fibres s'effectue sur des rouleaux chauffés de grand diamètre.

12. Procédé selon la revendication 9 ou 10, **caractérisé en ce que** la fusion au moins partielle des fibres thermoplastiques s'effectue par calandrage avec des rouleaux de calandrage chauffés, sous l'action de micro-ondes et/ou de rayons infrarouges.

13. Enveloppe d'aliments à base de cellulose régénérée ou précipitée, **caractérisée en ce qu'**elle comprend un renfort en un non-tissé selon une ou plusieurs des revendications 1 à 8.

14. Enveloppe d'aliments selon la revendication 13, **caractérisée en ce que** la proportion de non-tissé dans le poids total de l'enveloppe à l'état sec est de 25 à 40 %, de préférence de 28 à 35 %.

15. Enveloppe d'aliments selon la revendication 13 ou 14, **caractérisée en ce qu'**elle est enduite ou imprégnée sur le côté intérieur et/ou sur le côté extérieur.

16. Enveloppe d'aliments selon une ou plusieurs des revendications 13 à 15, **caractérisée en ce qu'**elle se présente sous forme comprimée comme une enveloppe plissée.
